# EUROPÄISCHE PATENTSCHRIFT

(11) **EP 0 373 372 B1**
(45) Veröffentlichungstag und Bekanntmachung des Hinweises auf die Patenterteilung: **08.09.1993**
(21) Anmeldenummer: 89121000.7
(22) Anmeldetag: 12.12.1989
(51) Int. Cl.: B29B 17/00, B29B 9/08, B29B 9/06

(54) **Agglomerator zum kontinuierlichen Regranulieren von thermoplastischen Kunststoffabfällen, insbesondere von Folien, Fäden und dergleichen**
Agglomerator for continuously regranulating thermoplastic wastes, especially films, filaments and the like
Dispositif d'agglomération pour la regranulation en continu de déchets thermoplastiques, notamment de films, de filaments et similaires

(30) Priorität: 14.12.1988 DE 3842072
(43) Veröffentlichungstag der Anmeldung: 20.06.1990
(73) Patentinhaber: PALLMANN MASCHINENFABRIK GMBH + CO. KG, D-66482 Zweibrücken (DE)
(72) Erfinder: Pallmann, Wilhelm, D-6660 Zweibrücken (DE)

(56) Entgegenhaltungen:
- EP-A- 0 163 619
- DE-A- 2 614 730
- DE-B- 1 288 780
- GB-A- 1 079 816
- US-A- 2 239 220
- US-A- 2 286 405
- US-A- 3 712 783
- US-A- 3 748 074

## Beschreibung

Die Erfindung betrifft eine Vorrichtung zum kontinuierlichen Regranulieren von thermoplastischen Kunststoffabfällen, insbesondere von Folien, Fasern, Fäden, Schnüren, Geweben, Teppichböden, Schaumstoffen und dgl. sowie von Gemischen aus diesen und anderen organischen und anorganischen Stoffen, wie sie im Oberbegriff des Patentanspruchs 1 umrissen ist.

Eine derartige Vorrichtung ist in der DE-C₂ 26 14 730 bereits beschrieben. Damit ist es möglich, Abfälle der eingangs genannten Beschaffenheit, die aus Polyäthylen, Polyvinylchlorid, Polypropylen, Polystrol, Polyamid und ähnlichen thermoplastischen Kunststoffen sowie aus Gemischen aus diesen und anderen organischen oder anorganischen Stoffen bestehen können, zu einem gleichmäßigen, rieselfähigen und abriebfesten Granulat ohne thermische Materialschädigung umzuformen, wie es zur technologischen Weiterverarbeitung in Extrudern, Pressen oder Spritzgießmaschinen benötigt wird.

Die Wiederverwertung von wertvollen Kunststoffabfällen, wie sie z. B. bei der Herstellung oder Verarbeitung von Kunststoffprodukten der bezeichneten Art als Ausschuß oder Verschnitt in beträchtlichen Mengen anfallen können, ist wegen deren voluminösen Beschaffenheit und schlechten Fließeigenschaft durch unmittelbare Verarbeitung in einem Extruder nur in sehr begrenztem Umfang möglich. Derartige Kunststoffababfälle müssen daher vorher entsprechend aufbereitet werden, wobei sie zunächst zerkleinert und anschließend die dadurch flitter- oder flauschartig gewordenen Kunststoffpartikel zu einem hochverdichteten, rieselfähigen und abriebfesten Granulat agglomeriert werden. Das auf diese Weise gewonnene Granulat muß die gleiche Qualität wie das Granulat der Neuware aufweisen, damit es diesem anteilmäßig beigemischt werden kann.

Bei der für die Agglomerierung erforderlichen Wärmebehandlung dürfen die Thermoplaste deshalb thermisch nicht geschädigt werden, d. h. sie dürfen nicht über ihren artspezifischen Schmelzpunkt hinaus erhitzt werden, bei dessen Überschreiten sie sich unter Freisetzen von meist schädlichen Gasen chemisch zersetzen und dadurch für die technologische Wiederverwertung unbrauchbar werden.

Eine solch schonende Agglomerierung der Kunststoffpartikel wird bei dem aus der DE-C₂ 26 14 730 bekannten Agglomerator dadurch bewirkt, daß die in den scheibenförmigen Ringraum eingespeisten Kunststoffpartikel dort von den rotierenden Preßflügeln erfaßt und in die von der Innenwand der ringförmigen Lochmatrize und der wirksamen Flanke der Preßflügel gebildeten und mit diesen umlaufenden Plastifizierkammern eingezogen werden. In den Plastifizierkammern wird die voluminöse Partikelmasse zunächst bei gleichzeitiger Entlüftung vorverdichtet und dann durch die von den Preßflügeln verursachte Friktionswärme in Sekundenbruchteilen plastifiziert. Zugleich wird sie infolge der stetigen Verengung der Plastifizierkammern auch von zunehmenden Druck- und Scherkräften intensiv bearbeitet. Dabei kann die auf diese Weise erweichte Thermoplastmasse jedoch erst dann durch die Lochmatrize entweichen, wenn der von den Preßflügeln auf sie ausgeübte Druck groß genug ist, um den Fließwiderstand in den Matrizenlöchern zu überwinden. Beim Hindurchpressen durch die Lochmatrize werden die infolge Erweichens klebrig gewordenen Thermoplastartikel zu kompakten Strängen oder Fäden ausgeformt, die sogleich nach ihrem Austritt aus der Matrize durch Messer, die an ihrer Außenwand umlaufen, in gleichmäßige Längen zerteilt werden, wodurch sich ein gleichförmiges rieselfähiges Granulat ergibt.

Da der Fließwiderstand in den Durchtrittslöchern der Matrize von dem soeben erreichten Plastifizierungsgrad abhängt, also um so geringer ist, je niedriger die momentane Viskosität der Thermoplastmasse ist, stellt sich infolge komplexer Rückkoppelung ein Gleichgewichtszustand zwischen dem Erweichungsgrad, dem Preßdruck und dem Fließwiderstand ein, der die Thermoplastmasse so rechtzeitig durch die Lochmatrize entweichen läßt, daß auf sie keine unnötige oder gar schädigende Friktionswärme mehr einwirken kann. Demzufolge wird von der mechanischen Antriebsenergie nur soviel in Prozeßwärme und Preßdruck umgesetzt, wie für eine kompakte Agglomerierung der Plasikpartikel gerade nötig ist. Durch diese sich autogen regelnde Druck- und Temperaturführung ist demnach gewährleistet, daß die Agglomerierung stets knapp unterhalb des Schmelzpunktes des jeweiligen Thermoplasttyps erfolgt, so daß eine thermische Materialschädigung ausgeschlossen ist.

Ausgehend von diesem Stand der Technik liegt der Erfindung die Aufgabe zugrunde, die Leistung des Agglomerators nicht nur quantitiv zu steigern, sondern auch die Qualität des erzeugten Granulats zu verbessern, ohne dabei eine Erhöhung des spezifischen, also auf die granulierte Kunststoffmasse bezogenen Energieaufwandes in Kauf nehmen zu müssen.

Diese Aufgabe wird erfindungsgemäß dadurch gelöst, daß der scheibenförmige Ringraum sich zu seiner Peripherie hin verengt. Infolge dieser radialen Verjüngung des Ringraumes verengen sich die umlaufenden Plastifizierkammern nicht nur, wie bei dem bekannten Agglomerator, in Umfangsrichtung, sondern zugleich auch in Radialrichtung. Dadurch wird auf die in den Plastifizierkammern befindlichen Plastikpartikel zu den bisherigen, von den Preßflügeln in Radial- und Umfangsrichtung ausgeübten Preß-, Scher- und Reibungskräften zusätzlich auch noch eine von der konischen Seitenwand verursachte, also axial gerichtete Bearbeitungskomponente wirksam. Diese dreidimensionale Bearbeitung der Partikelmasse hat nicht nur eine raschere Vorverdichtung bei gleichzeitigem Herauspressen der miteingeschleppten Luft zur Folge, sondern beschleunigt infolge zusätzlicher Scher- und Reibungseffekte auch die Plastifizierung innerhalb des nach außen hin dreidimensional abnehmenden Partikelvolumens. Beide Effekte steigern nicht nur die Durchsatzleistung des Agglomerators, sondern vergleichmäßigen auch die Erweichung innerhalb der Partikelmasse. Außerdem wird es dadurch möglich, die Breite der Lochmatrize zu reduzieren, was außer einer Verbilligung der Baukosten auch eine gleichmäßigere Material-und Temperaturverteilung über die Matrizenbreite und damit eine homogenere Beschaffenheit des erzeugten Granulats zur Folge hat.

Mit den in den Unteransprüchen gekennzeichneten Merkmalen ergeben sich weitere vorteilhafte Ausgestaltungsmöglichkeiten des erfindungsgemäß weiterentwickelten Agglomerators.

Die Erfindung wird anhand der zeichnerisch dargestellten Ausführungsbeispiele näher erläutert. Es zeigt:

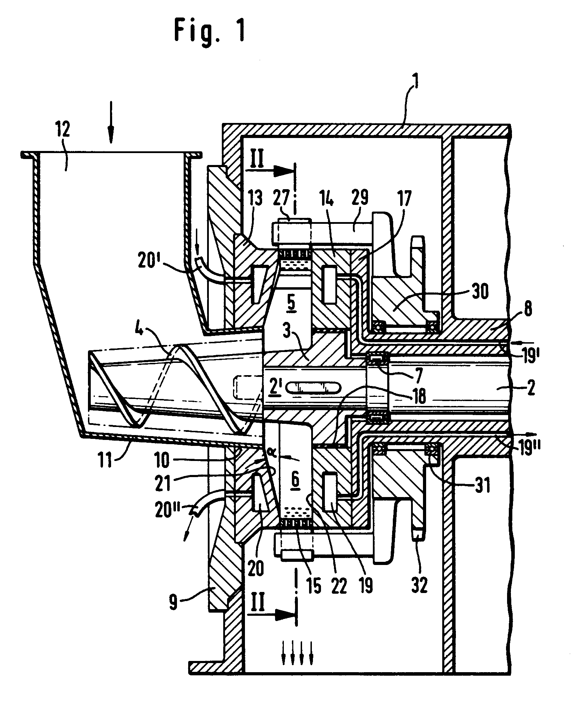

- Fig. 1: einen erfindungsgemäß gestalteten Agglomerator im Längsschnitt gemäß Linie I-I in Fig. 2;
- Fig. 2: einen Teil des Agglomerators im Querschnitt gemäß Linie II-II in Fig. 1
- Fig. 3: eine abgewandelte Ausführungsform der Erfindung im teilweisen Längsschnitt;
- Fig. 4: eine schematische Darstellung der Versuchseinrichtung, durch die der erfindungsgemäß erzielte technische Fortschritt bestätigt wurde.

In dem Gehäuse 1 des Agglomerators ist eine Antriebswelle 2 gelagert, deren Wellenzapfen 2′ sowohl mit einer Rotornabe 3 als auch mit einer Förderschnecke 4 drehfest verbunden ist.

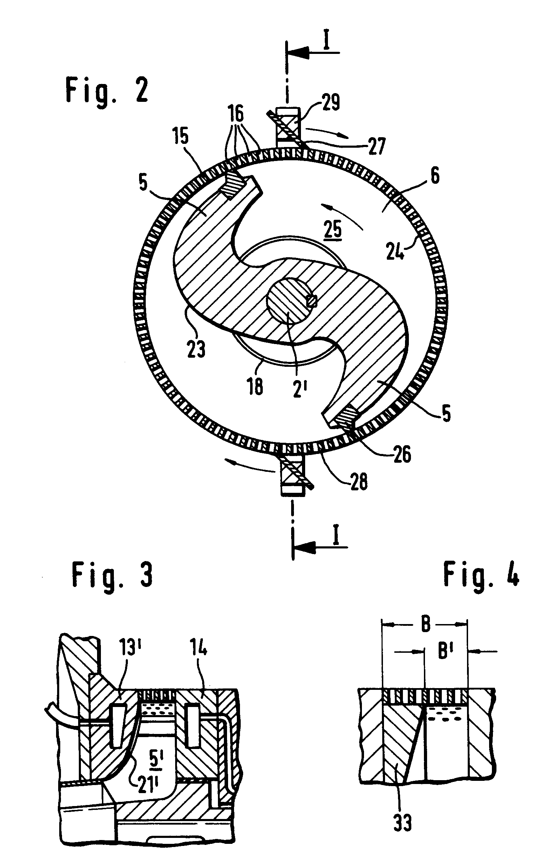

An der Rotornabe 3 sind zwei einander diametral gegenüberliegende Preßflügel 5 angeordnet, die in einem scheibenförmigen Ringraum 6 in der aus Fig. 2 ersichtlichen Pfeilrichtung umlaufen. Antriebswelle 2, Rotornabe 3, Förderschnecke 4 und die beiden Preßflügel 5 bilden ein Rotationsaggregat, das in einer Lagerung 7, die in einer rohrförmigen, rückwärtigen Gehäusedurchführung 8 untergebracht ist, fliegend gelagert ist. Ein ausschwenkbarer Gehäusedeckel 9 trägt in einem vorderen Durchlaß 10 das Gehäuse 11 der Förderschnecke 4 samt ihrem Einlaufstutzen 12.

Der von den beiden Preßflügeln 5 beaufschlagte scheibenförmige Ringraum 6 wird von zwei Ringwänden 13, 14 gebildet, die an ihrer Peripherie mittels einer ringförmigen Lochmatrize 15 miteinander verbunden sind. Die Lochmatrize 15 ist mit über ihren Umfang verteilten Durchtrittslöchern 16 versehen. Die vordere Ringwand 13 ist mit dem Gehäusedeckel 9 verbunden, während die hintere Ringwand 14 an einem Flansch 17 befestigt ist, der an der rückwärtigen, rohrförmigen Gehäusedurchführung 8 angeformt ist. Die rückseitige Abdichtung des scheibenförmigen Ringraumes 6 besorgt eine zwischen der Rotornabe 3 und der hinteren Ringwand 14 eingesetzte Spezialdichtung 18. In beiden Ringwänden 13, 14 sind Kühlmittelkammern 19, 20 vorgesehen, denen bzw. aus denen das Kühlmittel durch Leitungen 19′, 19˝ und 20′, 20˝ zu- bzw. abgeführt wird.

Die Innenfläche 21 der vorderen Ringwand 13 ist flachkonisch ausgebildet, wobei sie zur Achssenkrechten unter einem Winkel α geneigt ist. Die Innenfläche 22 der hinteren Ringwand 14 liegt hingegen in einer achssenkrechten Ebene. Infolge der flachkonischen Innenfläche 21 der vorderen Ringwand 13 verengt sich der scheibenförmige Ringraum 6 zu seiner Peripherie hin, und demzufolge ist auch die vordere Seitenwange der darin umlaufenden Preßflügel 5 entsprechend abgeschrägt.

Die wirksamen Flanken 23 der beiden Preßflügel 5 bilden, wie aus Fig. 2 ersichtlich, mit der zylindrischen Innenwand 24 der Lochmatrize 15 zwei umlaufende Plastifizierkammern 25, die sich entgegen der Drehrichtung der Preßflügel 5 verengen und in Umfangsrichtung durch je ein an der Innenwand 24 der Lochmatrize 15 anliegendes Druckglied 26 abgeschlossen sind.

Die zylindrische Außenwand 28 der Lochmatrize 15 wird von zwei umlaufenden Messern 27 bestrichen, die an Messerhaltern 29 nachstell- und auswechselbar befestigt sind. Die Messerhalter 29 sind auf einer Messerhalternabe 30 angeordnet, die mittels Lager 31 auf der rückseitigen rohrförmigen Gehäusedurchführung 8 gelagert und mit einem Kettenrad 32 versehen ist.

Die in Fig. 3 dargestellte abgewandelte Ausführungsform der Erfindung weist eine vordere Ringwand 13′ auf, deren Innenfläche 21′ rotationssymmetrisch konvex geformt ist, wobei die vordere Seitenwange der Preßflügel 5′ entsprechend konkav ausgebildet ist.

Anhand der in Fig. 4 schematisch dargestellten Versuchseinrichtung wurde in überraschender Weise festgestellt, daß durch Einbau eines Konusringes 33 in den aus der DE-C₂ 26 14 730 bekannten Agglomerator, wodurch die ursprüngliche wirksame Breite B der Lochmatrize 15 um etwa die Hälfte auf B′ verringert wurde, sich die Beschaffenheit und Homogenität des erzeugten Granulat merklich verbesserte, ohne daß dabei eine nennenswerte Reduzierung der Durchsatzmenge in Kauf genommen werden mußte.

Der erfindungsgemäß gestaltete Agglomerator arbeitet wie folgt:
Die zu granulierenden thermoplastischen Kunststoffabfälle der eingangs genannten Art werden zunächst in Schneidmühlen zerkleinert. Die dadurch erzeugte Schnitzel-, Flocken-oder Flauschmasse wird dann dem Einlaufstutzen 12 des Agglomerators zugeführt, wo sie von der Förderschnecke 4 dem scheibenförmigen Ringraum 6 zugefördert wird. Dort wird sie von der wirksamen Flanke 23 der Preßflügel 5 erfaßt und in die umlaufenden Plastifizierkammern 25 eingezogen. Infolge des besonderen Kurvenverlaufs der wirksamen Flanken 23 der Preßflügel 5 wird die lockere Partikelmasse bei gleichzeitiger Entlüftung zunächst vorverdichtet und anschließend durch intensive Friktionswärme in Bruchteilen einer Sekunde plastifiziert, also in einen erweichten Zustand übergeführt. Sobald die verdichtete Partikelmasse genügend erweicht ist und der von den Preßflügeln 5 ausgeübte Druck groß genug ist, um den Fließwiderstand in den Durchtrittslöchern 16 zu überwinden, kann die erweichte Partikelmasse aus den Plastifizierkammern 25 durch die Lochmatrize 15 hindurch entweichen. Beim Hindurchpressen durch die Lochmatrize erfährt die Partikelmasse in den Durchtrittslöchern eine Nachverdichtung, wobei die infolge Plastifizierung klebrig gewordenen Kunststoffpartikel zusammensintern und dadurch zu kompakten Strängen oder Fäden ausgeformt werden. Diese werden unmittelbar nach ihrem Austritt aus der Lochmatrize 15 von den umlaufenden Messern 27 in gleichmäßige Abschnitte zerteilt, so daß sich ein gleichförmiges, homogenes und hochverdichtetes Granulat ergibt.

Infolge des erfindungsgemäß sich radial nach außen verjüngenden scheibenförmigen Ringraumes 6 werden in den Plastifizierkammern 25 auf die Plastikpartikelmasse Preß- Scher-und Reibungskräfte nicht nur von der wirksamen Flanke 23 der Preßflügel 5 in Radial- und Umfangsrichtung, sondern infolge der konisch gestalteten Innenfläche 21 der Ringwand 13 von dieser zusätzlich auch in Axialrichtung ausgeübt. Durch diese dreidimensionale Bearbeitung wird nicht nur die Vorverdichtung, also das Herauspressen der mit der lockeren Partikelmasse eingeschleppten Luft begünstigt, sondern auch die Plastifizierung durch Intensivierung der Friktionswärme beschleunigt und innerhalb der Partikelmasse vergleichmäßigt, was eine Steigerung der spezifischen, also auf den freien Durchtrittsquerschnitt der Lochmatrize bezogenen Durchsatzleistung sowie eine homogenere und kompaktere Struktur des erzeugten Granulats zur Folge hat.

## Patentansprüche

1. Vorrichtung zum kontinuierlichen Regranulieren von thermoplastischen Kunststoffabfällen, insbesondere von Folien, Fasern, Fäden, Schnüren, Geweben, Teppichböden, Schaumstoffen und dergl. sowie von Gemischen aus diesen und anderen organischen oder anorganischen Stoffen, bestehend aus einem Agglomerator mit einer Zuführeinrichtung (12, 4), die axial in einen scheibenförmigen Ringraum (6) mündet, der an seinem Umfang von einer ringförmigen, außenseitig von Messern (27) bestrichenen Lochmatrize (15) begrenzt ist und in dem mindestens ein Preßflügel (5) rotiert, dessen wirksame Flanke (23) mit der Innenwand (24) der Lochmatrize (15) eine umlaufende Plastifizierkammer (25) bildet, die sich entgegen der Umlaufrichtung stetig verengt und in Umfangsrichtung von einem an der Innenwand (24) der Lochmatrize (15) dicht anliegenden Druckglied (26) abgeschlossen sowie beidseitig von je einer Ringwand (13, 14) des Ringraumes (6) abgedeckt ist, dadurch gekennzeichnet, daß der scheibenförmige Ringraum (6) sich zu seiner Peripherie hin verengt.

2. Vorrichtung nach Anspruch 1, dadurch gekennzeichnet, daß die Innenfläche (21) von mindestens einer der beiden Ringwände (13, 14) als Hüllfläche eines Kegelstumpfes ausgebildet ist.

3. Vorrichtung nach Anspruch 2, dadurch gekennzeichnet, daß die als Hüllfläche eines Kegelstumpfes ausgebildete Innenfläche (21) zur Achssenkrechten einen Neigungswinkel (α) zwischen 10° und 30° aufweist.

4. Vorrichtung nach Anspruch 1, dadurch gekennzeichnet, daß die Innenfläche (21′) von mindestens einer Ringwand (13′) rotationssymmetrisch gekrümmt ist.

## Claims

1. Apparatus for continuous regranulating of thermoplastic wastes, especially films, filaments, cords, tissues, carpeting, foams and the like as well as mixtures of those materials and other organic or inorganic materials, comprising of an agglomerator with a feeding device (12, 4) which discharges axially into a disc shaped annular space (6) which periphery is limited by a ring shaped die (15) on which outside knives (27) are rotating and in which inside at least one pressure piece (5) rotates which active flank (23) is forming with the inner wall (24) of the die (15) a rotating plastifying chamber (25) which is narrowing constantly in opposite direction to the rotation direction and which is closed in periphery direction by a pressure piece (26) leaning close to the inner wall (24) of the die (15) as well as on both sides by the walls (13, 14) of the annular space (6), characterized by the fact that the disc shaped annular space (6) is narrowing towards its periphery.

2. Apparatus as set forth in claim 1 wherein the inner surface (21) of at least one of the both walls (13, 14) is designed as enveloping surface of a truncated cone.

3. Apparatus as set forth in claim 2 wherein the inner surface (21) designed as enveloping surface of a truncated cone shows an angle of inclination (α) of 10 to 30 degrees to the vertical of the axis.

4. Apparatus as set forth in claim 1 wherein the inner surface (21') of at least one wall (13') is steadily inclined towards the periphery.

## Revendications

1. Dispositif d'agglomeration pour la regranulation en continu de déchets thermoplastiques, notamment de films, de filaments, de cordes, de tissus, de moquettes, de mousses et similaires ainsi que de mélanges composés de ces matériaux associés à des matériaux organiques ou inorganiques, constitué d'un agglomerateur avec dispositif d'alimentation (12, 4) qui débouche axialement dans un espace annulaire (6) lequel est limité à sa périphérie par une matrice (15) à perforations sur le pourtour extérieur de laquelle tournent des couteaux (27) et dans laquelle tourne au moins une aile de pression (5) dont le flanc actif (23) forme avec la paroi intérieure (24) de la matrice perforée (15) une chambre de ramollissement (25) rotative qui se rétrécit constamment dans le sens contraire au sens de rotation et qui est fermée au niveau de la paroi intérieure (24) de la matrice perforée (15) par une pièce de pression (26) ajustée ainsi que close des deux cotés par resp. une paroi (13, 14) de l'espace annulaire (6). Le dispositif est caractérisé en ce que l'espace annulaire (6) se rétrécit en direction de sa périphérie.

2. Dispositif selon la revendication 1 caractérisé en ce que la paroi intérieure (21) d'au moins une des deux parois (13, 14) est conçue comme paroi enveloppante d'un cône tronqué.

3. Dispositif selon la revendication 2 caractérisé en ce que la paroi intérieure (21) conçue comme paroi enveloppante d'un cône tronqué a un angle d'inclinaison (α) de 10 à 30 degrés par rapport à la verticale de l'axe.

4. Dispositif selon la revendication 1 caractérisé en ce que la paroi intérieure (21') d'au moins une paroi (13') est inclinée symétriquement vers la périphérie.
